# FASCICULE DE BREVET EUROPEEN

(11) **EP 1 369 555 B1**
(45) Date de publication et mention de la délivrance du brevet: **16.11.2005**
(21) Numéro de dépôt: 03291073.9
(22) Date de dépôt: 05.05.2003
(51) Int. Cl.: F01D 25/24, F02C 7/045

(54) **Dispositif pour le raccordement de deux pièces tubulaires de turboréacteur d'aéronef**
Einrichtung um zwei rohrförmige Teile eines Strahltriebwerks zu verbinden
Device for joining two tubular pieces of an aircraft jet engine

(30) Priorité: 05.06.2002 FR 0206896
(43) Date de publication de la demande: 10.12.2003
(73) Titulaire: AIRBUS France, 31060 Toulouse (FR)
(72) Inventeur: Porte, Alain, 31770 Colomiers (FR); Lalane, Jacques, 31650 Saint Orens (FR)
(74) Mandataire: Bonnetat, Christian

(56) Documents cités:
- EP-A- 0 352 993
- FR-A- 2 474 099
- FR-A- 2 767 560
- FR-A- 2 787 509
- GB-A- 2 010 434

## Description

La présente invention concerne le raccordement de deux pièces tubulaires de turboréacteur d'aéronef, telles que, par exemple, le carter de soufflante et l'entrée d'air ou la tuyère, dont au moins l'une d'elles porte un revêtement acoustique interne.

On sait que, dans les turboréacteurs à double flux, la paroi intérieure de la nacelle comporte un revêtement acoustique, afin d'absorber une partie du bruit engendré dans le canal de soufflante. Cependant, la paroi de cette nacelle étant constituée de plusieurs pièces - carter de soufflante, entrée d'air, tuyère - il est nécessaire de prévoir, entre ces pièces, des dispositifs de raccordement aptes à assurer la résistance mécanique de la nacelle sans nuire par trop à l'absorption du bruit.

Par exemple par le document US-6 123 170 (FR-2 767 560), on connaît déjà un dispositif de raccordement entre :
- d'une part, une première pièce tubulaire d'un turboréacteur d'aéronef, qui est pourvue à son extrémité avant d'une première bride externe annulaire et dont la paroi interne porte un revêtement acoustique ; et
- d'autre part, une seconde pièce tubulaire acoustique dudit turboréacteur, dont la paroi est constituée d'une peau interne perméable, d'une peau externe imperméable et d'une âme alvéolaire, interposée entre lesdites peaux interne et externe,
ledit dispositif de raccordement comportant :
- une pièce de raccordement annulaire comportant un manchon annulaire entourant extérieurement l'extrémité arrière de ladite seconde pièce tubulaire, ainsi qu'une seconde bride externe annulaire ;
- des premiers moyens de fixation répartis autour dudit manchon de ladite pièce de raccordement pour solidariser celle-ci de ladite seconde pièce tubulaire ; et
- des seconds moyens de fixation coopérant avec lesdites première et seconde brides pour solidariser lesdites première et seconde pièces tubulaires le long d'un plan de raccordement défini par lesdites première et seconde brides.

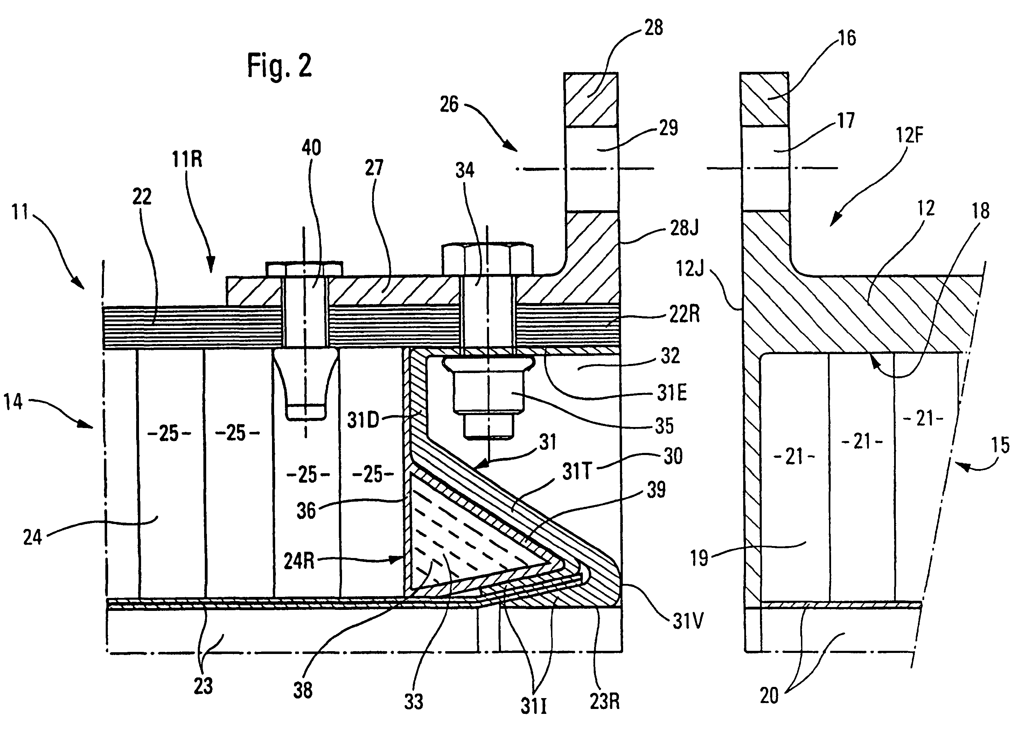

Dans les dispositifs de raccordement connus de ce type, lesdits premiers moyens de fixation (voir par exemple la figure 2 du document précité) peuvent traverser ledit manchon et la totalité de l'épaisseur de la paroi de l'extrémité arrière de ladite seconde pièce tubulaire. Dans ce cas, il est nécessaire que cette extrémité arrière présente une structure renforcée différente du reste de ladite seconde pièce pour assurer la transmission des efforts entre lesdites première et seconde pièces tubulaires. Il en résulte qu'une telle solution est onéreuse. De plus, pour renforcer mécaniquement l'extrémité arrière de la seconde pièce, l'âme alvéolaire est localement moins épaisse et/ou remplie d'une colle durcie, de sorte que l'isolation acoustique de cette extrémité arrière est moins bonne que dans le reste de ladite seconde pièce.

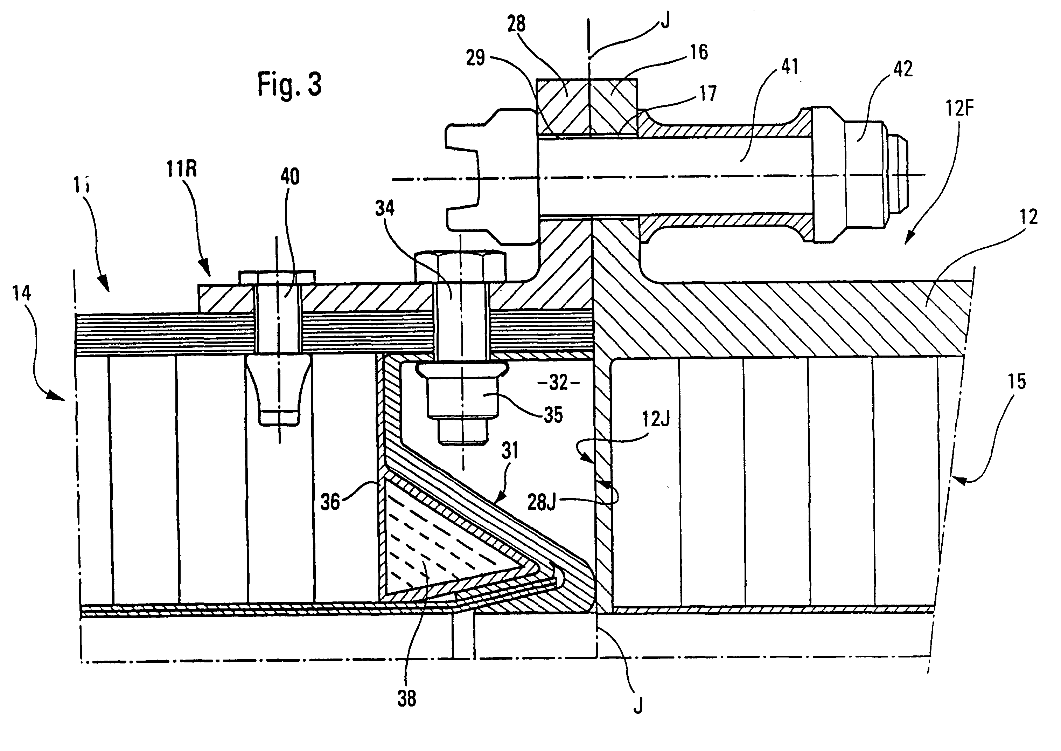

En variante, dans lesdits dispositifs de raccordement connus (voir par exemple la figure 3 du document précité), lesdits premiers moyens de fixation peuvent ne traverser que la peau externe de l'extrémité arrière de la seconde pièce tubulaire, pour solidariser ladite pièce de raccordement à cette dernière. Dans ce cas, ladite peau externe comporte une partie renforcée formant une saillie, en direction de ladite première pièce, par rapport au reste de la paroi de la seconde pièce, et ladite première pièce comporte une saillie acoustique, en direction de ladite première pièce, venant se loger à l'intérieur de ladite saillie de la peau externe. Cette variante de réalisation, comme la précédente, est donc onéreuse et, de toutes façons, l'isolation acoustique au niveau du raccord desdites première et seconde pièces est également moins bonne que dans le reste de ces dernières.

De plus, le montage et le démontage de ces dispositifs de raccordement connus, notamment à des fins de maintenance et d'inspection, se révèle peu pratique.

Partant du principe que les tentatives faites jusqu'à maintenant pour obtenir une isolation acoustique aussi peu dégradée que possible au niveau du raccord desdites première et seconde pièces sont relativement vaines et qu'elles entraînent des coûts élevés pour obtenir une résistance mécanique de ce raccord satisfaisante, tout en compliquant la maintenance, la présente invention a pour objet un dispositif de raccordement simple, aisé à monter et démonter et de grande résistance mécanique, qui, par ailleurs, n'entraîne pas une dégradation acoustique plus importante que celle engendrée par ces dispositifs connus.

L'objet de la présente invention est de fournir un dispositif de raccordement apte à assurer la transmission des efforts importants le traversant, tout en dégradant aussi peu que possible l'isolation acoustique et en permettant, de façon aisée, les opérations de maintenance et d'inspection.

A cette fin, selon l'invention, le dispositif de raccordement entre :
- d'une part, une première pièce tubulaire d'un turboréacteur d'aéronef, pourvue à son extrémité avant d'une première bride externe annulaire ; et
- d'autre part, une seconde pièce tubulaire acoustique dudit turboréacteur dont la paroi est constituée d'une peau interne perméable, d'une peau externe imperméable et d'une âme alvéolaire, interposée entre lesdites peaux interne et externe,
ledit dispositif de raccordement comportant :
- une pièce de raccordement annulaire comportant un manchon annulaire entourant extérieurement l'extrémité arrière de ladite seconde pièce tubulaire, ainsi qu'une seconde bride externe annulaire ;
- des premiers moyens de fixation répartis autour dudit manchon de ladite pièce de raccordement et traversant ledit manchon et ladite peau externe de l'extrémité arrière de ladite seconde pièce tubulaire pour solidariser celle-ci de ladite pièce de raccordement ; et
- des seconds moyens de fixation coopérant avec lesdites première et seconde brides pour solidariser lesdites première et seconde pièces tubulaires le long d'un plan de raccordement défini par lesdites première et seconde brides,
est remarquable en ce que :
- à l'extrémité arrière de ladite seconde pièce tubulaire, le chant de ladite âme alvéolaire est en retrait par rapport aux bords desdites peaux interne et externe, pour ménager un espace annulaire dans l'extrémité arrière de ladite seconde pièce tubulaire ;
- dans ledit espace annulaire est logé un anneau rigide à section au moins approximativement à la forme d'un S, qui comporte :
   ■ une branche externe, qui est en appui contre ladite peau externe et qui est solidarisée de celle-ci par lesdits premiers moyens de fixation ;
   ■ un dos, qui est disposé en regard du chant de ladite âme alvéolaire et qui est, éventuellement, solidarisé de celui-ci ;
   ■ un ventre, qui est disposé en regard de ladite première pièce tubulaire, après raccordement desdites première et seconde pièces tubulaires ;
   ■ une branche transversale, qui relie ledit dos audit ventre, et
   ■ une branche interne, qui est raccordée à ladite peau interne et est solidarisée de celle-ci ; et
- ladite branche externe, ledit dos et ladite branche transversale délimitent, dans ledit espace annulaire, un canal annulaire externe, qui est ouvert du côté arrière de ladite seconde pièce tubulaire et dans lequel sont logés les extrémités internes desdits premiers moyens de fixation.

Ainsi, ledit anneau rigide à section au moins approximativement en forme de S forme un renfort mécanique de grande résistance apte à supporter sans dommage les efforts qui doivent être transmis par ledit dispositif de raccordement. De plus, lesdits premiers moyens de fixation, qui sont par exemple du type à vis et écrou, sont facilement accessibles, pour maintenance et inspection, à travers ledit canal annulaire externe, après séparation desdites première et seconde pièces tubulaires par élimination desdits seconds moyens de fixation, qui, également, peuvent être du type à vis et écrou. Par ailleurs, à cause de la forme en S dudit anneau rigide, le retrait de ladite âme alvéolaire par rapport auxdites peaux interne et externe peut être suffisamment petit pour que l'isolation acoustique globale ne soit que faiblement dégradée.

Dans le dispositif de raccordement conforme à la présente invention, la branche transversale, le ventre et la branche interne dudit anneau à section en S peuvent :
- soit délimiter, dans ledit espace annulaire, un canal annulaire interne tourné vers ledit chant de ladite âme ; dans ce cas, dans ledit canal annulaire interne, on peut éventuellement disposer une bague de remplissage, dont la section correspond à celle dudit canal annulaire interne et qui peut être solidarisée à la fois dudit anneau rigide en S et du chant de ladite âme ;
- soit former une bague pleine, éventuellement pourvue, du côté opposé audit ventre, d'une face apte à être solidarisée du chant de ladite âme.

Ainsi, dans les deux cas, on peut renforcer la liaison entre ledit anneau rigide à section en S et le chant de l'âme alvéolaire.

Afin de renforcer encore la solidité de la liaison entre ladite pièce de raccordement annulaire et ladite seconde pièce tubulaire, sans conséquence sur l'isolation acoustique, il est avantageux de prévoir, comme cela est décrit dans le document US-6 123 170 (FR-2 767 560) rappelé ci-dessus, en plus desdits premiers moyens de fixation, des moyens de fixation aveugles répartis autour du manchon de la pièce de raccordement et traversant ledit manchon et la peau externe de l'extrémité arrière de la seconde pièce tubulaire, à l'aplomb de ladite âme annulaire.

Cependant, afin d'éviter de fatiguer lesdits moyens de fixation aveugles, ce qui entraînerait des complications de maintenance, le dispositif de raccordement selon l'invention est prévu pour que lesdits moyens de fixation aveugles absorbent moins de la moitié des efforts transmis par ledit dispositif de raccordement entre lesdites première et seconde pièces tubulaires, le reste desdits efforts étant absorbés par lesdits premiers moyens de fixation.

En variante, lesdits premiers moyens de fixation peuvent être répartis en au moins deux jeux distincts, espacés l'un de l'autre le long dudit manchon annulaire.

L'anneau rigide à section en S conforme à la présente invention peut être métallique, par exemple en acier inoxydable ou en alliage à base d'aluminium. Cependant, il peut, en variante, être constitué par une pièce composite fibres-matrice.

Les figures du dessin annexé feront bien comprendre comment l'invention peut être réalisée. Sur ces figures, des références identiques désignent des éléments semblables.
La figure 1 est une vue schématique, en coupe axiale, d'un turboréacteur d'aéronef.
La figure 2 illustre, en coupe axiale partielle, le raccord, réalisé conformément à la présente invention, entre la paroi intérieure de l'entrée d'air et le carter de soufflante, avant assemblage de ces éléments.
La figure 3 illustre, en vue semblable à la figure 2, ledit raccord, après assemblage de la paroi intérieure de l'entrée d'air et du carter de soufflante.
La figure 4 illustre, en vue semblable à la figure 3, une variante de réalisation du raccord conforme à la présente invention.
La figure 5 illustre, en vue semblable à la figure 2, encore une autre variante du raccord conforme à la présente invention.

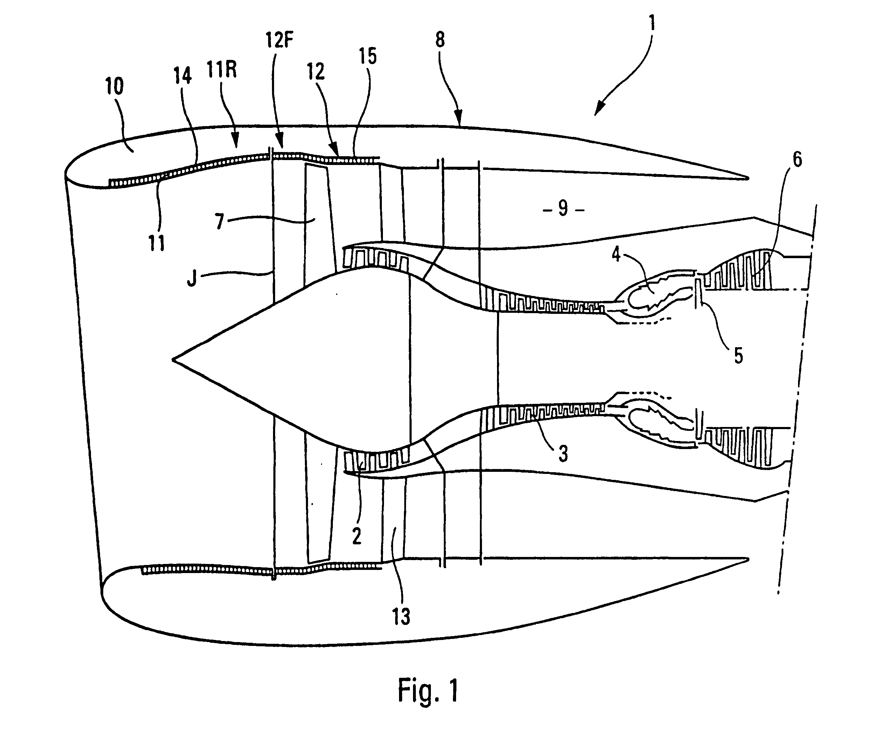

Le turboréacteur à double flux 1, représenté schématiquement sur la figure 1, comporte, de façon connue et en alignement, un compresseur basse pression 2, un compresseur à haute pression 3, une chambre de combustion 4, une turbine haute pression 5 et une turbine basse pression 6. Le compresseur basse pression 2 entraîne en rotation un rotor de soufflante 7, placé à l'avant dudit turboréacteur. Autour de ces éléments 2 à 7, et coaxialement à eux, est disposée une nacelle 8, ménageant avec ces éléments un canal de soufflante annulaire 9, dans lequel soufflent les pales du rotor de soufflante 7.

La partie avant de la nacelle 8 forme une structure annulaire d'entrée d'air 10 dont le bord d'attaque est caréné. A son extrémité arrière 11R, la paroi intérieure 11 de la structure d'entrée d'air 10 est habituellement fixée à l'extrémité avant 12F d'un carter annulaire de soufflante 12 le long d'un plan de raccordement J. Ce carter de soufflante 12 est disposé autour de la soufflante 7 et il est relié rigidement à la structure du moteur central 2 à 6 par au moins un jeu de bras 13 orientés radialement. Cette liaison mécanique rigide entre le carter de soufflante 12 et la structure du moteur central 2 à 6 permet de maîtriser au mieux le jeu existant entre ce carter et les extrémités des pales de la soufflante 7.

Dans les turboréacteurs modernes, la réduction du bruit constitue l'un des objectifs prioritaires. A cet effet, il est de pratique courante de réaliser la majeure partie de la paroi intérieure de la nacelle 8 sous la forme d'un revêtement acoustique de réduction de bruit. Comme représenté schématiquement et partiellement sur la figure 1, la paroi intérieure 11 de la structure d'entrée d'air 10, ainsi qu'éventuellement le carter de soufflante 12, présentent habituellement, au moins en partie, un tel revêtement acoustique 14 ou 15, respectivement.

L'objet de la présente invention, dans les exemples de réalisation décrits ci-après, est un dispositif de raccordement le long du plan J, entre l'extrémité arrière 11R de la paroi intérieure 11 de la structure d'entrée d'air 10 et l'extrémité avant 12F du carter de soufflante 12.

Comme on peut le voir dans l'exemple de réalisation de la figure 2, l'extrémité avant 12F du carter de soufflante tubulaire 12, généralement métallique, est pourvue d'une bride externe annulaire 16, percée de trous périphériques 17 et délimitant une face annulaire d'extrémité 12J. La paroi interne 18 du carter 12 peut porter un revêtement acoustique 15, qui est par exemple constitué par une âme alvéolaire 19, recouverte par une peau interne annulaire 20. L'âme alvéolaire 19 est du type nid d'abeilles à alvéoles 21 aussi profonds que possible, tandis que la peau interne 20 est perméable à l'air et constituée, par exemple, par une tôle perforée ou par un tissu ajouré de carbone ou de métal.

Par ailleurs, l'extrémité arrière 11R de la paroi intérieure annulaire 11 de la structure d'entrée d'air 10 est constituée par une peau externe imperméable 22, une peau interne perméable 23 et une âme alvéolaire intermédiaire 24. La peau externe imperméable 22 est par exemple une structure composite multicouche apte à faire office de réflecteur acoustique et à assurer la résistance mécanique de la paroi 11. L'âme alvéolaire 24 présente des alvéoles 25 et est de structure semblable à celle de l'âme alvéolaire 19. De même, la peau interne perméable 23 présente une structure semblable ou identique à celle de la peau interne 20.

Autour de l'extrémité arrière 11R de la paroi 11 est prévue une pièce de raccordement annulaire 26 comportant un manchon annulaire 27 entourant ladite extrémité arrière 11R et une bride externe annulaire 28, percée de trous périphériques 29 et délimitant une face d'extrémité 28J pour ladite extrémité 11R.

Comme cela est représenté sur les figures 2 et 3, à l'extrémité arrière 11R de la paroi 11, le chant annulaire 24R de l'âme alvéolaire 24 est en retrait par rapport aux bords 22R et 23R des peaux 22 et 23 pour ménager un espace annulaire 30, ouvert à travers la bride 28.

Un anneau rigide 31, présentant une section au moins approximativement en forme de S, est logé dans ledit espace annulaire 30 et partage ce dernier en deux canaux annulaires coaxiaux 32 et 33. Le canal annulaire 32 est externe et il est ouvert du côté arrière de l'extrémité 11R, à travers la bride 28. Le canal annulaire 33 est interne et il est tourné vers le chant 24R de l'âme alvéolaire 24 de la paroi 11.

L'anneau rigide 31 peut être métallique (par exemple en acier inoxydable ou en un alliage d'aluminium), ou présenter une structure composite constituée de plusieurs plis de tissus de fibres de carbone ou de fibres analogues.

Quelle que soit sa structure, l'anneau rigide 31 comporte :
- une branche externe 31E qui est en appui contre la peau externe 22 et qui est solidarisée de cette dernière par des ensembles de vis 34 et d'écrous 35, en acier ou en titane par exemple. Les ensembles 34, 35 sont répartis autour du manchon annulaire 27 et traversent celui-ci et la peau externe 22, pour solidariser de plus ledit manchon 27 sur l'extrémité arrière 11R. Les écrous 35 sont disposés dans le canal annulaire externe 32 et sont donc accessibles à travers la bride 28 ;
- un dos 31D qui est disposé en regard du chant 24R de l'âme alvéolaire 24 et qui peut être solidarisé de ce chant par une couche de colle 36 ;
- un ventre 31V, qui est légèrement en retrait de la face d'extrémité 28J de l'extrémité arrière 11R, et qui est disposé en regard de la face annulaire d'extrémité 12J de l'extrémité avant 12F après raccordement des extrémités 11R et 12F ;
- une branche transversale 31T, qui relie le dos 31D et le ventre 31V ; et
- une branche interne 31I, qui est raccordée à la peau interne 23 et est solidarisée de celle-ci.

A l'intérieur du canal annulaire interne 33 peut être disposée une bague de remplissage 38, dont la section correspond à celle dudit canal annulaire interne 33 et qui peut être solidarisée du chant 24R de l'âme alvéolaire 24 par ladite couche de colle 36 et de l'anneau rigide 31 par une couche de colle 39, interposée entre elle-même et les branches 31T et 31I de ce dernier. En variante, la bague de remplissage 38 peut être une excroissance de l'âme alvéolaire 24.

Du côté du manchon 27 opposé à la bride 28 sont prévus des boulons aveugles 40, répartis autour du manchon 27 de la pièce de raccordement 26 et traversant ledit manchon 27 et ladite peau externe 22 de l'extrémité arrière 11R, à l'aplomb de l'âme alvéolaire 24. L'ensemble des éléments 26, 27, 34-35 et 40 est prévu pour que les boulons aveugles 40 n'aient à supporter que moins de la moitié efforts transmis entre les pièces tubulaires 11 et 12.

Comme illustré par la figure 3, pour assembler les pièces tubulaires 11 et 12, on plaque les faces d'extrémité 12J et 28J l'une contre l'autre en formant le plan de jonction J et on introduit des boulons 41, dans les trous en regard 17 et 29 des brides 16 et 28. Après quoi, on visse des écrous 42 sur lesdits boulons 41 pour presser lesdites brides l'une contre l'autre.

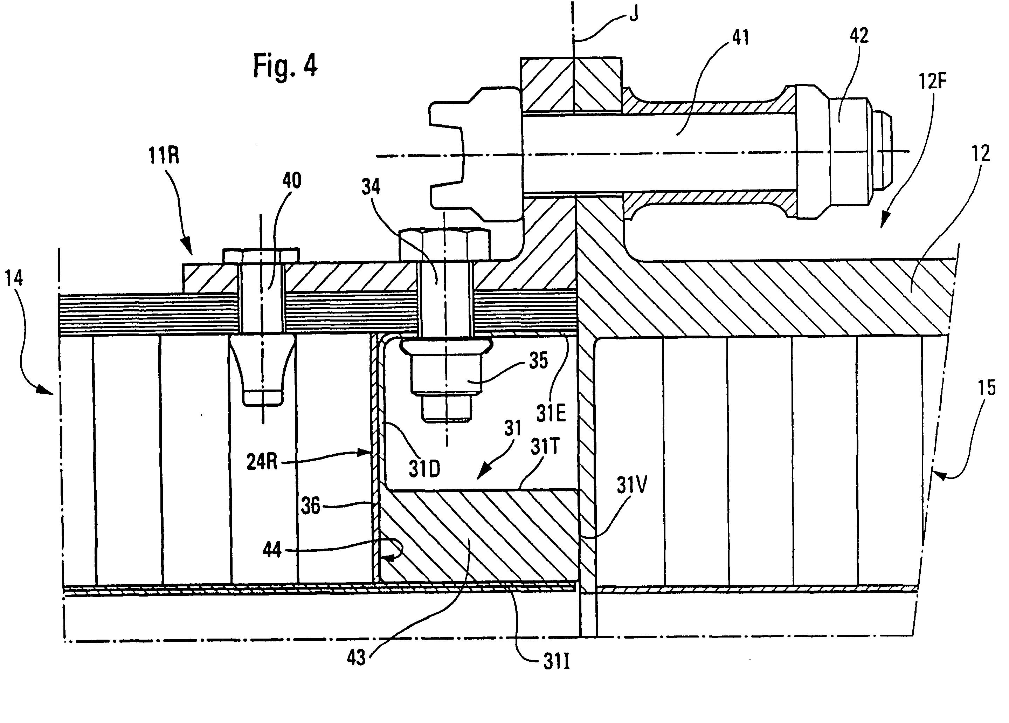

Dans la variante de réalisation de l'anneau rigide 31 représentée sur la figure 4, la branche transversale 31T, le ventre 31V et la branche interne 31I forment une bague pleine 43, qui peut être pourvue, du côté opposé audit ventre 31V, d'une face 44 apte à être solidarisée du chant 24R de l'âme alvéolaire 24. De préférence, la face 44 est alors en prolongement du dos 31D, de sorte que l'anneau rigide 31 peut être solidarisé sur toute la hauteur dudit chant 24R par la couche de colle 36.

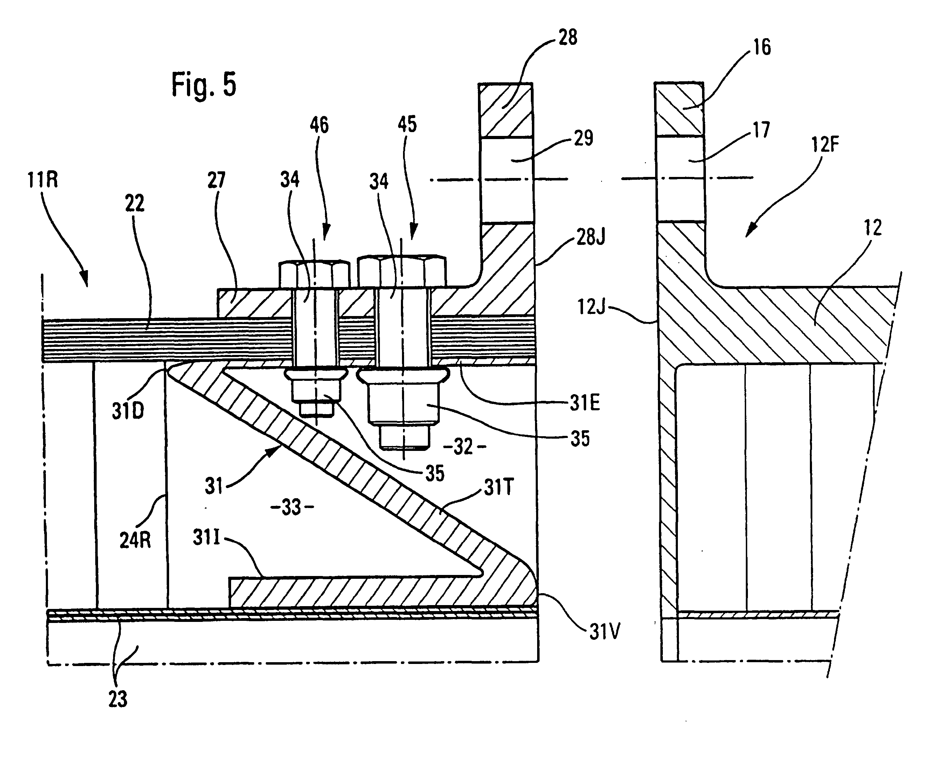

Dans la variante de réalisation représentée sur la figure 5, l'anneau rigide 31 présente un dos 31D pratiquement ponctuel, non solidarisé du chant 24R de l'âme 24. De même, le ventre 31V est également pratiquement ponctuel. Le canal annulaire interne 33 est vide (sans bague de remplissage 38). En outre, les ensembles de vis 34 et d'écrous 35 sont répartis en deux jeux distincts 45 et 46, espacés l'un de l'autre le long dudit manchon annulaire 27. Les vis 34 et écrous 35 du jeu 46 peuvent être identiques ou différents (ce qui est représenté sur la figure 5) des vis 34 et des écrous 35 du jeu 45.

## Revendications

1. Dispositif de raccordement entre :
- d'une part, une première pièce tubulaire (12) d'un turboréacteur d'aéronef, pourvue à son extrémité avant d'une première bride externe annulaire (16) ; et
- d'autre part, une seconde pièce tubulaire acoustique (11) dudit turboréacteur dont la paroi est constituée d'une peau interne perméable (23), d'une peau externe imperméable (22) et d'une âme alvéolaire (24), interposée entre lesdites peaux interne et externe,
ledit dispositif de raccordement comportant :
- une pièce de raccordement annulaire (26) comportant un manchon annulaire (27) entourant extérieurement l'extrémité arrière (11R) de ladite seconde pièce tubulaire (11), ainsi qu'une seconde bride externe annulaire (28) ;
- des premiers moyens de fixation (34, 35) répartis autour dudit manchon (27) de ladite pièce de raccordement (26) et traversant ledit manchon et ladite peau externe (22) de l'extrémité arrière de ladite seconde pièce tubulaire pour solidariser celle-ci de ladite pièce de raccordement ; et
- des seconds moyens de fixation (41, 42) coopérant avec lesdites première et seconde brides (16, 28) pour solidariser lesdites première et seconde pièces tubulaires (11, 12) le long d'un plan de raccordement (J) défini par lesdites première et seconde brides,
**caractérisé en ce que** :
- à l'extrémité arrière (11R) de ladite seconde pièce tubulaire (11), le chant (24R) de ladite âme alvéolaire (24) est en retrait par rapport aux bords (22R, 23R) desdites peaux interne et externe (22, 23), pour ménager un espace annulaire (30) dans l'extrémité arrière de ladite seconde pièce tubulaire (11) ;
- dans ledit espace annulaire (30) est logé un anneau rigide (31) à section au moins approximativement à la forme d'un S, qui comporte :
■ une branche externe (31E), qui est en appui contre ladite peau externe (22) et qui est solidarisée de celle-ci par lesdits premiers moyens de fixation (34, 35) ;
■ un dos (31D), disposé en regard du chant (24R) de ladite âme alvéolaire (24) ;
■ un ventre (31V), qui est disposé en regard de ladite première pièce tubulaire (12), après raccordement desdites première et seconde pièce tubulaire ;
■ une branche transversale (31T), qui relie ledit dos (31D) audit ventre (31V), et
■ une branche interne (31I), qui est raccordée à ladite peau interne (23) et est solidarisée de celle-ci ; et
- ladite branche externe (31E), ledit dos (31D) et ladite branche transversale (31T) délimitent, dans ledit espace annulaire (30), un canal annulaire externe (32), qui est ouvert du côté arrière de ladite seconde pièce tubulaire et dans lequel sont logés les extrémités internes (35) desdits premiers moyens de fixation (34, 35).

2. Dispositif de raccordement selon la revendication 1,
**caractérisé en ce que** ledit dos (31D) est solidarisé du chant (24R) de l'âme alvéolaire (24).

3. Dispositif de raccordement selon l'une des revendications 1 ou 2,
**caractérisé en ce que** ladite branche transversale (31T), ledit ventre (31V) et ladite branche interne (31I) délimitent, dans ledit espace annulaire (30), un canal annulaire interne (33) tourné vers ledit chant (24R) de ladite âme (24) et **en ce que**, dans ledit canal annulaire interne (33), est disposée une bague de remplissage (38), dont la section correspond à celle dudit canal annulaire interne (33).

4. Dispositif de raccordement selon la revendication 3,
**caractérisé en ce que** ladite bague de remplissage (38) est solidarisée, à la fois, dudit anneau rigide (31) et du chant (24R) de l'âme (24).

5. Dispositif de raccordement selon l'une des revendications 1 ou 2,
**caractérisé en ce que** ladite branche transversale (31T), ledit ventre (31V) et ladite branche interne (31I) forment une bague pleine (43).

6. Dispositif de raccordement selon la revendication 5,
**caractérisé en ce que** ladite bague pleine (43) est pourvue, du côté opposé audit ventre (31V), d'une face (44) apte à être solidarisée du chant (22R) de l'âme (24).

7. Dispositif de raccordement selon l'une des revendications 1 à 6,
**caractérisé en ce que** lesdits premiers moyens de fixation (34, 35) sont répartis en au moins deux jeux distincts (45, 46), espacés l'un de l'autre le long dudit manchon annulaire (27).

8. Dispositif de raccordement selon l'une des revendications 1 à 7,
**caractérisé en ce qu'**il comporte, en plus desdits premiers moyens de fixation (34, 35), des moyens de fixation aveugles (40) répartis autour dudit manchon (27) de ladite pièce de raccordement (26) et traversant ledit manchon (27) et ladite peau externe (22) de l'extrémité arrière (11R) de ladite seconde pièce tubulaire (11) à l'aplomb de ladite âme alvéolaire (24), pour participer à la solidarisation dudit manchon (27) sur ladite seconde pièce tubulaire (11).

9. Dispositif de raccordement selon la revendication 8,
**caractérisé en ce que** lesdits moyens de fixation aveugles (40) absorbent moins de la moitié des efforts transmis par ledit dispositif de raccordement entre lesdites première et seconde pièces tubulaires (11, 12).

10. Dispositif de raccordement selon l'une quelconque des revendications 1 à 9,
**caractérisé en ce que** ledit anneau rigide (31) à section en S est métallique.

11. Dispositif de raccordement selon l'une quelconque des revendications 1 à 9,
**caractérisé en ce que** ledit anneau rigide (31) à section en S est une pièce composite fibres-matrice.

## Patentansprüche

1. Vorrichtung zum Verbinden zwischen:
- einerseits einem ersten rohrförmigen Teil (12) eines Turbostrahltriebwerks für Flugzeuge, das an seinem vorderen Ende mit einem ersten ringförmigen Außenflansch (16) versehen ist; und
- andererseits einem zweiten rohrförmigen schalldämmenden Teil (11) des Turbostrahltriebwerks, dessen Wand aus einer durchlässigen Innenhaut (23), einer undurchlässigen Außenhaut (22) und einem zwischen der Innen- und Außenhaut angeordneten Wabenkern (24) besteht,
wobei die Verbindungsvorrichtung aufweist:
- ein ringförmiges Anschlussteil (26), das eine ringförmige Muffe (27), die das hintere Ende (11R) des zweiten rohrförmigen Teils (11) außen umschließt, sowie einen zweiten ringförmigen Außenflansch (28) aufweist;
- erste Befestigungsmittel (34, 35), die rund um die Muffe (27) des Anschlussteils (26) angeordnet sind und die Muffe und die Außenhaut (22) des hinteren Endes des zweiten rohrförmigen Teils durchdringen, um dieses an dem Anschlussteil zu befestigen; und
- zweite Befestigungsmittel (41, 42), die mit dem ersten und dem zweiten Flansch (16, 28) zusammenarbeiten, um das erste und das zweite rohrförmige Teil (11, 12) entlang einer von dem ersten und dem zweiten Flansch definierten Verbindungsebene (J) zu befestigen, **dadurch gekennzeichnet, dass**:
- die Kante (24R) des Wabenkerns (24) an dem hinteren Ende (11R) des zweiten rohrförmigen Teils (11) relativ zu den Rändern (22R, 23R) der Innen- und Außenhaut (22, 23) zurückgesetzt ist, um in dem hinteren Ende des zweiten rohrförmigen Teils (11) einen ringförmigen Raum (30) zu schaffen;
- in dem ringförmigen Raum (30) ein starrer Ring (31) mit einem wenigstens annähernd S-förmigen Querschnitt untergebracht ist, der aufweist:
• einen Außenarm (31E), der an der Außenhaut (22) anliegt und mit den ersten Befestigungsmitteln (34, 35) an dieser befestigt ist;
• einen Rücken (31D), der gegenüber der Kante (24R) des Wabenkerns (24) angeordnet ist;
• einen Bauch (31V), der nach der Verbindung des ersten und des zweiten rohrförmigen Teils gegenüber des ersten rohrförmigen Teils (12) angeordnet ist;
• einen Querarm (31T), der den Rücken (31D) und den Bauch (31V) miteinander verbindet, und
• einen Innenarm, der mit der Innenhaut (23) verbunden und an dieser befestigt ist; und
der Außenarm (31E), der Rücken (31D) und der Querarm (31T) in dem ringförmigen Raum (30) einen ringförmigen Außenkanal (32) definieren, der an der Rückseite des zweiten rohrförmigen Teils offen ist, und in dem die inneren Enden (35) der ersten Befestigungsmittel (34, 35) platziert sind.

2. Vorrichtung zum Verbinden nach Anspruch 1,
**dadurch gekennzeichnet, dass** der Rücken (31D) an der Kante (24R) des Wabenkerns (24) befestigt ist.

3. Vorrichtung zum Verbinden nach einem der Ansprüche 1 oder 2,
**dadurch gekennzeichnet, dass** der Querarm (31T), der Bauch (31V) und der Innenarm (31I) in dem ringförmigen Raum (30) einen ringförmigen, zur Kante (24R) des Kerns (24) weisenden Innenkanal (33) definieren, und dass in dem ringförmigen Innenkanal (33) ein Füllring (38) angeordnet ist, dessen Querschnitt dem des ringförmigen Innenkanals (33) entspricht.

4. Vorrichtung zum Verbinden nach Anspruch 3,
**dadurch gekennzeichnet, dass** der Füllring (38) gleichzeitig an dem starren Ring (31) und an der Kante (24R) des Kerns (24) befestigt ist.

5. System nach einem der Ansprüche 1 oder 2,
**dadurch gekennzeichnet, dass** der Querarm (31T), der Bauch (31V) und der Innenarm (31I) einen massiven Ring (43) bilden.

6. Vorrichtung zum Verbinden nach Anspruch 5,
**dadurch gekennzeichnet, dass** der massive Ring (43) an der dem Bauch (31V) gegenüberliegenden Seite mit einer Fläche (44) versehen ist, die an der Kante (22R) des Kerns (24) befestigbar ist.

7. Vorrichtung zum Verbinden nach einem der Ansprüche 1 bis 6,
**dadurch gekennzeichnet, dass** die ersten Befestigungsmittel (34, 35) in wenigstens zwei verschiedenen Spielen (45, 46) voneinander beabstandet entlang des ringförmigen Flansches (27) angeordnet sind.

8. Vorrichtung zum Verbinden nach einem der Ansprüche 1 bis 7,
**dadurch gekennzeichnet, dass** sie zusätzlich zu den ersten Befestigungsmitteln (34, 35) Blindbefestigungsmittel (40) aufweist, die rund um die Muffe (27) des Anschlussteils (26) angeordnet sind und die Muffe (27) und die Außenhaut (22) des hinteren Endes (11R) des zweiten rohrförmigen Teils (11) lotrecht zu dem Wabenkern (24) durchdringen, um bei der Befestigung der Muffe (27) an dem zweiten rohrförmigen Teil (11) mitzuwirken.

9. Vorrichtung zum Verbinden nach Anspruch 8,
**dadurch gekennzeichnet, dass** die Blindbefestigungsmittel (40) weniger als die Hälfte der Kräfte absorbieren, die von der Vorrichtung für die Verbindung zwischen dem ersten und dem zweiten rohrförmigen Teil (11, 12) übertragen werden.

10. Vorrichtung zum Verbinden nach einem der Ansprüche 1 bis 9,
**dadurch gekennzeichnet, dass** der starre Ring (31) mit S-förmigem Querschnitt aus Metall ist.

11. Vorrichtung zum Verbinden nach einem der Ansprüche 1 bis 9,
**dadurch gekennzeichnet, dass** der starre Ring (31) mit S-förmigem Querschnitt ein Faser-Matrix- Verbundteil ist.

## Claims

1. A connecting device comprising the connection between:
- on the one hand, a first tubular piece of an aircraft turbine engine, provided at its front end with a first annular external flange; and
- on the other hand, a second acoustic tubular piece of said turbine engine, the wall of which consists of a permeable internal skin, an impermeable external skin and a cellular core inserted between said internal and external skins,
said connecting device comprising:
- an annular connecting piece comprising an annular sleeve externally surrounding the rear end of said second tubular piece, and a second annular external flange;
- first fixing means distributed around said sleeve of said connecting piece and passing through said sleeve and said external skin of the rear end of said second tubular piece to secure the latter to said connecting piece; and
- second fixing means collaborating with said first and second flanges to secure said first and second tubular pieces along a connecting plane defined by said first and second flanges,
**characterized in that** :
- at the rear end of said second tubular piece the edge face of said cellular core is set back from the edges of said internal and external skins to leave an annular space in the rear end of said second tubular piece;
- in said annular space there is housed a rigid ring with an at least approximately S-shaped cross section, comprising:
• an external branch, which bears against said external skin and is secured to the latter by said first fixing means;
• a back, arranged facing the edge face of said cellular core;
• a front arranged facing said first tubular piece, after said first and second tubular pieces have been connected;
• a transverse branch connecting said back to said front; and
• an internal branch connected to said internal skin and secured to the latter; and
- said external branch, said back and said transverse branch delimit, in said annular space, an external annular duct which is open on the rear side of said second tubular piece and in which the internal ends of said first fixing means are housed.

2. The connecting device as claimed in claim 1,
**characterized in that** said back is secured to the edge face of the cellular core.

3. The connecting device as claimed in claim 1 or claim 2,
**characterized in that** said transverse branch, said front and said internal branch delimit, in said annular space, an internal annular duct facing toward said edge face of said core and
**characterized in that**, arranged in said internal annular duct, is a filler ring the cross section of which corresponds to that of said internal annular duct.

4. The connecting device as claimed in claim 3,
**characterized in that** said filler ring is secured both to said rigid ring and to the edge face of the core.

5. The connecting device as claimed in claim 1 or claim 2,
**characterized in that** said transverse branch, said front and said internal branch form a solid ring.

6. The connecting device as claimed in claim 5,
**characterized in that** said solid ring is provided, on the opposite side to said front, with a face able to be secured to the edge face of the core.

7. The connecting device as claimed in anyone of claims 1 to 6,
**characterized in that** said first fixing means are distributed in at least two separate sets, spaced apart along said annular sleeve.

8. The connecting device as claimed in anyone of claims 1 to 7,
**characterized in that** it comprises, in addition to said first fixing means, blind fixing means distributed about said sleeve of said connecting piece and passing through said sleeve and said external skin of the rear end of said second tubular piece in line with said cellular core to contribute to securing said sleeve to said second tubular piece.

9. The connecting device as claimed in claim 8,
**characterized in that** said blind fixing means absorb less than half of the forces transmitted by said connecting device between said first and second tubular pieces.

10. The connecting device as claimed in anyone of claims 1 to 9,
**characterized in that** said rigid ring of S-shaped cross section is made of metal.

11. The connecting device as claimed in anyone of claims 1 to 9,
**characterized in that** said rigid ring of S-shaped cross section is a fiber-matrix composite component.
